# EUROPEAN PATENT SPECIFICATION

(11) **EP 2 872 979 B1**
(45) Date of publication and mention of the grant of the patent: **06.03.2019**
(21) Application number: 13877161.3
(22) Date of filing: 02.12.2013
(51) Int. Cl.: G06F 3/0488, G06F 3/0482, G06F 3/0484

(54) **VIEW MODE SWITCH OF GRAPHICAL USER INTERFACE**
ANSICHTSMODUS SCHALTER EINER GRAFISCHEN BENUTZERSCHNITTSTELLE
COMMUTATION DU MODE DE VISIONNAGE D'UNE INTERFACE UTILISATEUR GRAPHIQUE

(30) Priority: 07.03.2013 CN 201310073611; 07.03.2013 CN 201310073180
(43) Date of publication of application: 20.05.2015
(73) Proprietor: Tencent Technology (Shenzhen) Company Limited, Guangdong 518000 (CN)
(72) Inventor: PENG, Yu, Shenzhen Guangdong 518000 (CN); DONG, Tianzhe, Shenzhen Guangdong 518000 (CN); HE, Xiao, Shenzhen Guangdong 518000 (CN); ZHAO, Yongsheng, Shenzhen Guangdong 518000 (CN); WANG, Heng, Shenzhen Guangdong 518000 (CN); LIU, Yelu, Shenzhen Guangdong 518000 (CN); ZHAO, Zhiming, Shenzhen Guangdong 518000 (CN); GUO, Rui, Shenzhen Guangdong 518000 (CN); GAO, Ziguang, Shenzhen Guangdong 518000 (CN)
(74) Representative: Gunzelmann, Rainer
(86) International application number: PCT/CN2013/088362
(87) International publication number: WO 2014/134937

(56) References cited:
- EP-A2- 2 256 609
- US-A1- 2005 246 647
- US-A1- 2012 198 386
- US-A1- 2013 019 193

## Description

### TECHNICAL FIELD

The disclosure generally relates to applications in electronic devices, and in particular to a method, apparatus, graphical user interface, system and non-transitory computer-readable storage medium for implementing a view mode switch of a graphical user interface (GUI) of an application.

### BACKGROUND

As electronic devices with touch screens, such as a smart mobile phone, a tablet personal computer, etc., have become more popular, various applications that may run on the portable electronic devices, such as news client application, social network client application, scientific journal client application, and stock information client application, have emerged for users' choices.

Each of the applications, after being installed in the electronic devices and initiated by their users, may provide the users with their desired information. The application is generally configured with a GUI, which may take a form of a window, and various pieces of information intended to push to users may be visually rendered in the GUI as a corresponding number of sub-views. Additionally, the users may interact with the application through the GUI, for example, apply a touch gesture on the touch screen using a finger or a stylus, to view their desired piece of information.

The document US 2012/0198386 A1 relates to causing display of thumbnail images in portable devices with an integrated camera. It describes a solution in which a real-time image that represents image data output from an image sensing device is displayed and at least one thumbnail image is displayed over a portion of the displayed real-time image.

In addition, the document EP 2 256 609 A2 relates to a mobile device capable of touch-based zooming and control method thereof, which is intended to execute the zooming function such as a zoom-in and a zoom-out on the target data in response to the received gesture input.

### SUMMARY

According to an aspect of the disclosure, a method for implementing a view mode switch of a GUI is provided, which includes steps as follows: at an electronic device with a touch screen display, displaying a graphic user interface (GUI) of an application on the touch screen display; detecting a single-finger double-tap gesture on a first sub-view object among a plurality of sub-view objects; upon detection of the single-finger double-tap gesture on the first sub-view object, causing the GUI to perform a thumbnail-to-complete or complete-to-thumbnail view mode switch; acquiring information from a remote server, which is associated with a sub-view object to be presented and adapted to the switched view mode of the GUI; and presenting the sub-view object with the acquired information in the GUI, wherein the acquiring the information from the remote server includes: if the GUI switches from the thumbnail view mode to the complete view mode, acquiring complete information which is associated with the sub-view object to be presented, or if the GUI switches from the complete view mode to the thumbnail view mode, acquiring simplified information which is associated with the sub-view object to be presented, wherein the simplified information contains at least one of a title, a summary or a port ion of the complete information and wherein the presenting the sub-view object with the acquired information in the GUI includes: creating a sub-view element at a predetermined position of the GUI, based on size attributes of the sub-view object that are adapted to the switched view mode; importing the acquired information to the sub-view element; and rendering the sub-view element in the GUI.

According to another aspect of the disclosure, an apparatus for implementing a view mode switch of a GUI is provided, which includes: a display module, configured to display a graphic user interface (GUI) of an application on a touch screen display of an electronic device; a detecting module, configured to detect a single-finger double-tap gesture on a first sub-view object among a plurality of sub-view objects; a switching module, configured to cause the GUI to perform a thumbnail-to-complete or complete-to-thumbnail view mode switch, upon detection of the single-finger double-tap gesture on the first sub-view object; an acquiring module, configured to acquire information from a remote server, which is associated with a sub-view object to be presented and adapted to the switched view mode of the GUI; and a presenting module, configured to present the sub-view object with the acquired information in the GUI, wherein the acquiring module (908) is configured to acquire complete information which is associated with the sub-view object to be presented if the GUI switches from the thumbnail view mode to the complete view mode, or to acquire simplified information which is associated with the sub-view object to be presented if the GUI switches from the complete view mode to the thumbnail view mode, wherein the simplified information contains at least one of a title, a summary or a portion of the complete information, and wherein the presenting module comprises: a creating unit, configured to create a sub-view element at a predetermined position of the GUI, based on size attributes of the sub-view object that are adapted to the switched view mode; an importing unit, configured to import the acquired information to the sub-view element; and a rendering unit, configured to render the sub-view element in the GUI.

According to yet another aspect of the disclosure, an electronic device is provided, which includes a touch screen display, a processor coupled to the touch screen display and a memory coupled to the processor and including instructions that, when executed, cause the processor to perform the above method.

According to yet another aspect of the disclosure, a system is provided, which includes the above electronic device, and a server configured to provide the information to the electronic device in response to the electronic device's request or actively.

According to yet another aspect of the disclosure, a non-transitory computer-readable storage medium is provided, which includes instructions that, when executed, cause the processor to perform the above method.

This section is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

These and other sample aspects of the disclosure will be described in the detailed description and the claims that follow, and in the accompanying drawings, wherein:
Fig. 1 illustrates a structure schematic view of a system for implementing an application according to some embodiments of the disclosure;
FIG. 2 is a simplified block diagram illustrating a portable electronic device with a touch screen according to some embodiments of the disclosure;
Fig. 3 illustrates an example GUI of the portable electronic device according to some embodiments of the disclosure;
FIG. 4 illustrates several graphical user interfaces of an example application in different view modes according to some embodiments of the disclosure;
FIG. 5 illustrates several graphical user interfaces of an example application in the complete view mode according to some embodiments of the disclosure;
Fig. 6 illustrates several graphical user interfaces of an example application in different view modes according to some embodiments of the disclosure;
Fig. 7 illustrates several graphical user interfaces of an example application in different view modes according to some embodiments of the disclosure;
Fig. 8 is a flow chart illustrating a method for implementing a view mode switch of a GUI according to some embodiments of the disclosure; and
Fig. 9 is a block diagram illustrating an apparatus for implementing a view mode switch of a GUI according to some embodiments of the disclosure.

In accordance with common practice the various features illustrated in the drawings may not be drawn to scale. Accordingly, the dimensions of the various features may be arbitrarily expanded or reduced for clarity. In addition, some of the drawings may be simplified for clarity. Thus, the drawings may not depict all of the components of a given apparatus (e.g., device) or method. Finally, like reference numerals may be used to denote like features throughout the specification and figures.

### DETAILED DESCRIPTION

Various aspects of the disclosure are described below. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. Furthermore, an aspect may comprise at least one element of a claim.

Reference throughout this specification to "an example," "an embodiment," or the like in the singular or plural means that one or more particular features, structures, or characteristics described in connection with an embodiment is included in at least one embodiment of the present disclosure. Thus, the appearances of the phrases "an example," "an embodiment," or the like in the singular or plural in various places throughout this specification are not necessarily all referring to the same embodiment. Furthermore, the particular features, structures, or characteristics may be combined in any suitable manner in one or more embodiments.

The terminology used in the description of the invention herein is for the purpose of describing particular examples only and is not intended to be limiting of the invention. As used in the description of the invention and the appended claims, the singular forms "a," "an," and "the" are intended to include the plural forms as well, unless the context clearly indicates otherwise. Also, as used in the description herein and throughout the claims that follow, the meaning of "in" includes "in" and "on" unless the context clearly dictates otherwise. It will also be understood that the term "and/or" as used herein refers to and encompasses any and all possible combinations of one or more of the associated listed items. It will be further understood that the terms "may include," "including," "comprises," and/or "comprising," when used in this specification, specify the presence of stated features, operations, elements, and/or components, but do not preclude the presence or addition of one or more other features, operations, elements, components, and/or groups thereof.

According to various embodiments of the disclosure, a graphic user interface (GUI) of an application is displayed at a touch screen display of an electronic device, a plurality of sub-view objects are included in the GUI, upon detection of a single-finger double-tap gesture on the first sub-view object, the GUI performs a thumbnail-to-complete or complete-to-thumbnail view mode switch, an information content, which is associated with a sub-view object to be presented and adapted to the switched view mode of the GUI is acquired , and the sub-view object with the acquired information content is presented in the GUI.

As described above, in some embodiments of the disclosure, a single-finger double-tap gesture is used to trigger the view mode switch of the GUI. Here, the "single-finger double-tap gesture" may be performed by using a finger to tap a desired area of the touch screen display for twice within a preset time interval. However, other touch gestures may be contemplated. For example, one or more taps, one or more swipes (from left to right, right to left, upward and/or downward and/or a rolling of a finger (from right to left, left to right, upward and/or downward) that has made contact with the touch screen display may be used.

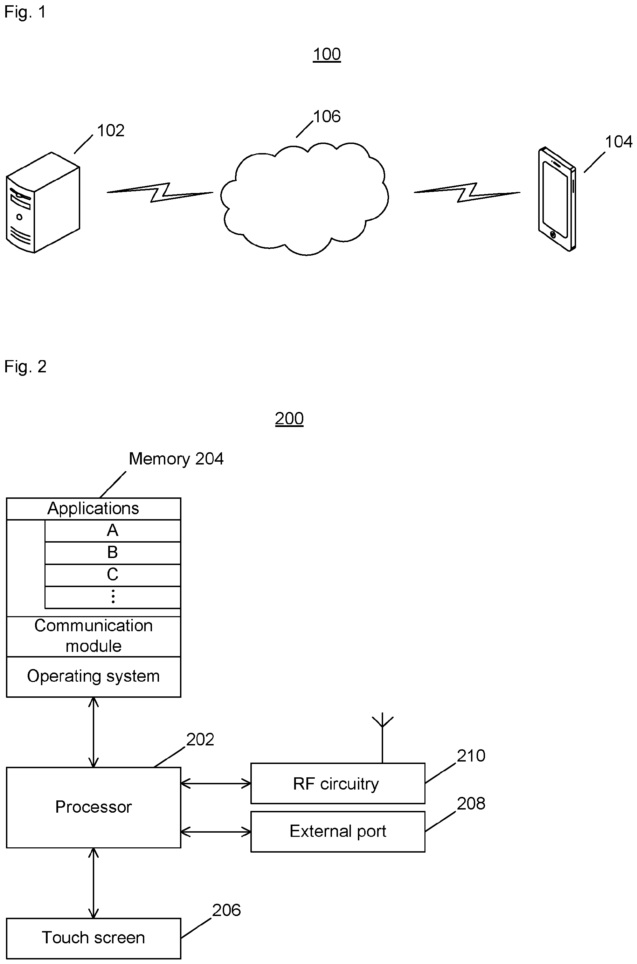

Fig. 1 illustrates a structure schematic view of a system 100 for implementing an application according to some embodiments of the disclosure.

As shown in Fig. 1, normal operation of the client application depends on a server 102 and a terminal device 104 (for example, a portable electronic device) which are connected to each other through a network 106.

The client application is installed in a memory of the terminal device 104 as a software component. The client application in the terminal device 104 may request for information from the server 102 actively or in response to a user's command, and may receive and present information from the server 102 to the user in a GUI of the client application. The server 102, functioning as an information source, transmits proper information as requested to the terminal device 104 or actively pushes information conforming to a preset policy to the terminal device 104. For example, for a news client application, each piece of information corresponds to a piece of news.

Specifically, the server 102 may transmit proper information to the terminal device 104 based on at least of the following conditions: a type of the requested information, an information update interval, a correlation of the information, a sharing frequency of the information.

In order to actively pushing information conforming to a preset policy to the terminal device 104, a timer, which provides a time amount equal to a preset information update interval, for example, a two-minute interval, may be arranged at the server 102. Once the timer is started, the server 102 actively pushes information to the terminal device 104 at the preset information update interval. Upon completion of each information push, the timer is reset and a new round of timing is started. Alternatively or additionally, when a sharing and/or forwarding times or the number of comments of a piece of information reaches a preset threshold, for example, the piece of information has been shared and/or forwarded for 50 times, the server considers this piece of information has a piece of high-sharing/forwarding-frequency information and actively pushes this piece of information to the terminal device 104.

The information which may be provided by the server 102 may include various types. For example, the information may be of at least one of a graphic type, a text type, an audio type or a video type. If a piece of information contains at least one of graphic, audio or video data, then it is referred to a piece of multimedia information. The various types of information are stored and transmitted by taking a data block as a unit, and each piece of information may consist of one or more data blocks.

Compared with a piece of multimedia information, a piece of text information has a relatively smaller data amount and thus occupies a relatively smaller memory space. Therefore, after one or more data blocks corresponding to a piece of text information which is requested from the server or is actively pushed by the server arrive at the terminal device 104, the terminal device 104 may store the data blocks in a memory pool reserved for the client application.

Turning to a piece of multimedia information, which for example, contains data of at least one of the graphic, audio and video types, it has a relatively larger data amount, occupies a relatively larger memory space and may have a significant impact on the processing efficiency of the client application. Therefore, data blocks of a piece of multimedia information are marked with identifiers, for example, timestamps or serial numbers, and are generally stored at the server 102, while their identifiers may be transmitted to the terminal device 104. When it is required to import the data blocks of the piece of the multimedia information into the GUI of the client application for presenting, the client application may request the data blocks of the piece of the multimedia information from the server 102 based on the timestamps or serial numbers.

At the terminal device 104, the client application may receive data blocks of multiple pieces of information from the server 102, and construct a sub-view object to be presented in the GUI of the client application for each piece of information.

Each sub-view object may be defined to have an array-based data structure. As appreciated by one of ordinary skill in the art, a sub-view object may be presented in the GUI to have a rectangular frame. Accordingly, the array of the sub-view object may include several default parameters, including a coordinate of a top left corner of the frame, a width of the frame and a height of the frame, where the coordinate of the top left corner of the frame is used to identify the original position of the sub-view object in the GUI. Also, note that the sub-view object may be presented differently, depending on whether the GUI is in a thumbnail view mode or in a complete view mode. Specifically, when the GUI is in the thumbnail view mode, the sub-view object is presented in the GUI to have a small rectangular frame, with a simplified content, for example, a brief summary, a portion, or a title, of the piece of information corresponding to the sub-view object; and when the GUI is in the complete view mode, the sub-view object is presented in the GUI to have a large rectangular frame, with a complete content of the piece of information corresponding to the sub-view object.

Additionally, for a sub-view object corresponding to a piece of information, the data blocks of the piece of information may be stored separately from the array of the sub-view object, or stored in the array of the sub-view object.

Specifically, as described above, both sub-view objects and data blocks of received pieces of information are stored in the memory pool. In an example, based on a first storage manner, data of different types are stored separately, i.e., an array of a sub-view object, and data blocks of a piece of information corresponding to the sub-view object are stored separately. In another example, based on a second storage manner, data of different types are stored together, i.e., an array of a sub-view object contains the data blocks of a piece of information corresponding to the sub-view object; and thus, in this case, on the whole, just sub-view objects are stored in the memory pool.

If the first storage manner is employed, an array of a sub-view object and data blocks corresponding to the sub-view object are configured with an attribute or an index/identifier, for example, a timestamp or a serial number, such that the array of sub-view object and the data blocks corresponding to the sub-view object are associated with each other through the timestamp or serial number. If the second storage manner is employed, presenting of the sub-view object may be performed by extracting corresponding data blocks directly from the array of sub-view object.

As described above, the client application may receive multiple pieces of information from the server 102 during a time period. Correspondingly, multiple sub-view objects may be constructed by the client application. The client application may sort the sub-view objects based on a predefined rule, such as in chronological order, in popularity order, or based on a user-defined policy, etc., to form a list, in which the sequence of each sub-view object among the received sub-view objects is recorded. Further, the client application may store this list for further use.

As described above, the sub-view objects are presented to the user in the GUI of the client application, which may take a form of a window. Nowadays, various client applications support a GUI, such as a news client application, a social network client application, a scientific journal client application, a stock client application, etc.. These client applications allow information to be presented in their respective GUIs.

The GUI may contain several screen pages and present one or more sub-view objects in each screen page. The user may apply a swipe up/down gesture on the touch screen to scroll the screen pages.

For ease of use, a GUI generally has two modes, i.e., a thumbnail view mode and a complete view mode, as described above. In the thumbnail view mode, multiple sub-view objects may be presented in a single screen page of the GUI, and each sub-view object is presented in the GUI with a simplified content, such as a brief summary, a portion or a title, of the piece of information corresponding to the sub-view object. If a user is interested in a certain sub-view object, for example, through viewing the title, he/she may use one or more fingers or a stylus to touch or contact an area of the touch screen corresponding to the sub-view object of interest, to switch the GUI from the thumbnail view mode to a complete view mode. In the complete view mode, the sub-view object is presented in the GUI with a complete content of the piece of information. As can be seen in connection with the above description, when the GUI switches from the thumbnail view mode to the complete view mode to present completes of a certain piece of information, the client application may have to extract corresponding data blocks from the memory pool (usually for text information, since corresponding data blocks may have been stored in the memory pool), or request corresponding data blocks from the server 102 (usually for multimedia information, since just identifiers of the corresponding data blocks may have been stored in the memory pool), such that the corresponding sub-view object is presented with a complete content within a large frame in the GUI; and when GUI switches from the complete view mode back to the thumbnail view mode, the client application may have to take the data blocks associated with completes of the piece of information back to the memory pool or directly discard them, and cause the GUI to present multiple sub-view objects, each with a simplified content within a small frame.

FIG. 2 is a simplified block diagram illustrating a portable electronic device 200 with a touch screen 212 according to some embodiments of the disclosure. The portable electronic device 200 may include one or more processors 202, a memory 204 (which may include one or more computer readable storage mediums), a touch-sensitive display system 206 containing a touch screen 212, an external port 108 and an RF circuitry 210. As appreciated by one of ordinary skill in the art, the portable electronic device 200 is only one example of a portable electronic device 200, and that the portable electronic device 200 may have more or fewer components than shown, may combine two or more components, or a may have a different configuration or order of the components. As appreciated by one of ordinary skill in the art, the portable electronic device 200 may also contain an audio circuitry, a speaker, a microphone an optical sensor, a Global Positioning System (GPS) receiver, a power system, and any other input or control devices (not shown). The various components shown in FIG. 2 may be implemented in hardware, software or a combination of hardware and software, including one or more signal processing and/or application specific integrated circuits.

The one or more processors 202 may retrieve instructions from the memory 204 and execute them. The one or more processors 202 may be implemented as a general purpose processor, a digital signal processor (DSP), an application specific integrated circuit (ASIC), a field programmable gate array (FPGA) or other programmable logic device, discrete gate or transistor logic, discrete hardware components, or any combination thereof.

The memory 204 may store instructions for the processor 202 to execute or data for the processor 202 to operate on. The memory 204 may include random access memory (RAM), which may be dynamic RAM (DRAM) or static RAM (SRAM) as desired. Additionally, the memory 104 may include storage for storing data and instructions, such as read-only memory (ROM), such as mask-programmed ROM, programmable ROM (PROM), erasable PROM (EPROM), electrically erasable PROM (EEPROM), electrically alterable ROM (EAROM), or flash memory.

The touch-sensitive display system 206 may provide an input interface and an output interface between the portable electronic device and a user. The touch-sensitive display system 206 may display visual output to the user through the output interface. The visual output may include graphics, text, icons, video, and any combination thereof (collectively referred to as "graphics"). The touch screen 212 in touch-sensitive display system 206 is a touch-sensitive surface that accepts input from the user based on haptic and/or tactile contact. The touch-sensitive display system 206 detects contact (and any movement or breaking of the contact) on the touch screen 212 and converts the detected contact into interaction with user-interface objects (e.g., one or more soft keys, icons, web pages or images) that are displayed on the touch screen 212. In an exemplary embodiment, a point of contact between a touch screen in the touch-sensitive display system 106 and the user corresponds to a finger of the user, or a stylus.

In some embodiments, in addition to the touch screen, the portable electronic device 200 may include a touchpad (not shown) for activating or deactivating particular functions. In some embodiments, the touchpad is a touch-sensitive area of the portable electronic device that, unlike the touch screen, does not display visual output. The touchpad may be a touch-sensitive surface that is separate from the touch screen in the touch-sensitive display system 206 or an extension of the touch-sensitive surface formed by the touch screen.

The RF circuitry 210 receives and transmits RF signals. The RF circuitry 210 converts electrical signals to/from electromagnetic signals and communicates with communications networks and other communications devices via the electromagnetic signals. The RF circuitry 208 may communicate with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication may use any of a plurality of communications standards, protocols and technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email, instant messaging (IM), and/or Short Message Service (SMS)), or any other suitable communication protocol, including communication protocols not yet developed as of the filing date of this document.

The external port 208 (e.g., Universal Serial Bus (USB), FIREWIRE, etc.) may be adapted for coupling directly to other devices or indirectly over a network (e.g., the Internet, wireless LAN, etc.).

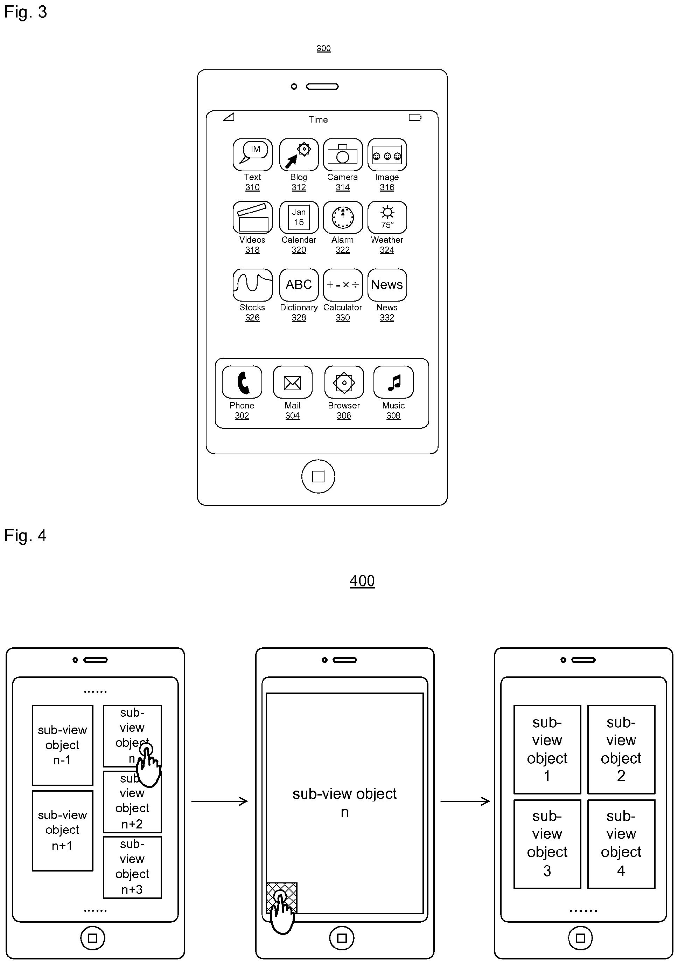

Fig. 3 illustrates an example GUI 300 of the portable electronic device 200 according to some embodiments of the disclosure, in which several application icons are presented.

In some embodiments, as shown in Fig. 3, software components stored in the memory 302 may include various applications, such as a telephone application 302, an e-mail client application 304, a browser application 306, a music player application 308, an instant messaging (IM) application 310; a blogging application 312; a camera application 314; an image management application 316; a video player application 318, a calendar application 320, an alarm clock application 322, a weather-forecast application 324, a stocks application 326, a dictionary application 328, a calculator application 330 and other applications obtained by the user, such as a news client application 332.

Note that the above described applications correspond to a set of instructions for performing one or more functions described above. These applications (i.e., sets of instructions) need not be implemented as separate software programs, procedures or modules, and thus various subsets of these sets of instructions may be combined or otherwise re-arranged in various embodiments. In some embodiments, the memory 104 may store a subset of the instructions and data structures identified above. Furthermore, the memory 104 may store additional instructions and data structures not described above.

FIG. 4 illustrates several graphical user interfaces 400 of an example application in different view modes according to some embodiments of the disclosure.

When a haptic and/or tactile contact event is detected within an area associated with an icon of the application 432, the application 432 is initiated, a GUI of the application, which takes a form of a window, is popped up on the touch screen 212, and several sub-view objects (each corresponding to a piece of information) in a thumbnail view mode may be presented in the GUI as a corresponding number of sub-view elements. In an embodiment, in the complete view mode, a back button occurs in the GUI and the user may press the back button by touching or contacting it to return to the thumbnail view mode.

As shown in Fig. 4, in the thumbnail view mode, the GUI includes a scrollview list of a plurality of sub-view objects. The drawing at the left hand illustrates five sub-view objects n-1, n, n+1, n+2, n+3 in the thumbnail view mode in the current screen page of the GUI, where n>1. Note that there may be one or more sub-view objects arranged before and after the five objects, which may be presented through an upward/downward slide gesture, as appreciated by one of ordinary skill in the art. The drawing at the middle illustrates the sub-view object n in the touch screen in the complete view mode, and the shadow block in the bottom right corner of the sub-view object n in the complete view mode indicates the back button. When the user presses the back button by touching or contacting an area on the touch screen display corresponding to the back button, the GUI switches back to the thumbnail view mode, as shown in the drawing at the right hand of Fig. 4.

In the above embodiments, when a thumbnail-to-complete switch is performed on a certain sub-view object, a complete content of this sub-view object is acquired, either from a remote server through the network (in the case that it has not been pre-loaded) or from the local memory (in the case that it has been pre-loaded), such that this sub-view object is presented in the GUI with its complete content.

However, it should be noted that in the complete view mode, only the one sub-view object is presented in the GUI, and the user cannot view other sub-view objects regardless of simplified or complete contents thereof, unless the GUI switches back to the thumbnail view mode.

Further, when the GUI switches back to the thumbnail view mode, the sub-view objects will be presented from the very first one (as shown in the drawing at the right hand of Fig. 4, the sub-view object 1 will be presented at the top position of the GUI). In other words, the user's manipulation/reading history is lost. This may be inconvenient because the user may usually wish to continue his/her reading from the next sub-view object n+1.

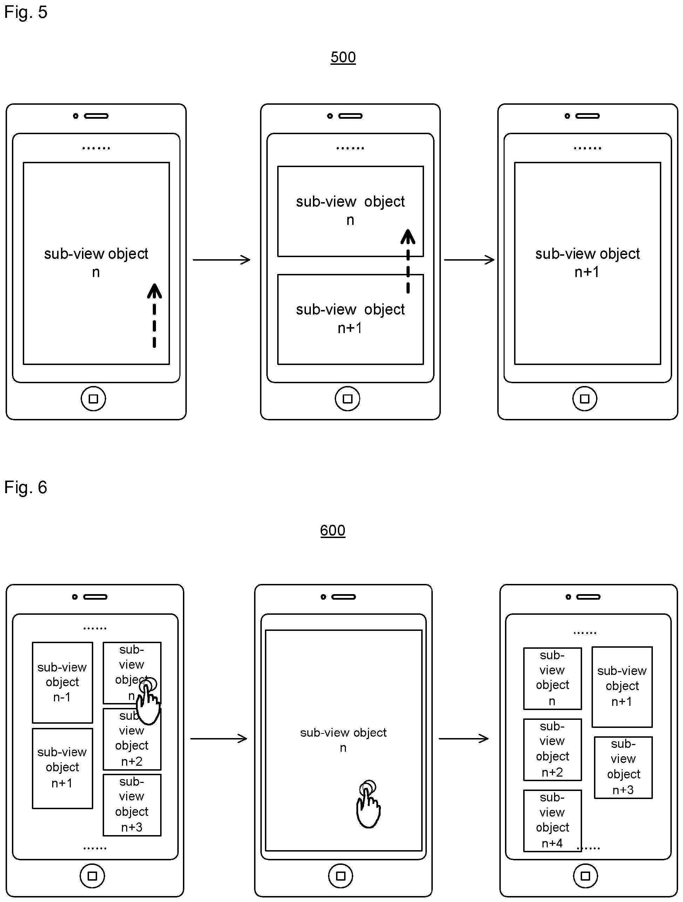

FIG. 5 illustrates several graphical user interfaces of an example application in the complete view mode according to some embodiments of the disclosure.

In contrast to the embodiments described referring to Fig. 4, in some embodiments as shown in Fig. 5, all of the sub-view objects may be presented as a scrollview list in the complete view mode. Though only the sub-view object n may be presented in the current screen page of the GUI, the user may apply, for example, an upward/downward sliding gesture on the touch screen display, and then the GUI scrolls to the next screen page and the sub-view object n-1/n+1 with its complete content may be presented.

Additionally, although in the above embodiment, a single sub-view object is presented in one screen page in the complete view mode, in yet another embodiment, one or more sub-view objects may be presented in one screen page, which depends on a size of the touch screen, a size of a complete content of the corresponding sub-view object and/or any other application or system configurations.

In the above embodiments, it becomes easier for the user to manipulate the application because the user does not have to frequently switch between the thumbnail and complete view modes to view complete contents of several continuously arranged sub-view objects of interest.

However, still, whenever the user switches the GUI back to the thumbnail view mode, the sub-view objects will be presented from the very first one (as shown in the drawing at the right hand of Fig. 4, the sub-view object 1 will be presented at the top position of the GUI). In other words, the user's manipulation/reading history is lost. This may be inconvenient because the user may usually wish to continue his/her viewing from the next sub-view object n+1.

Fig. 6 illustrates several graphical user interfaces of an example application in different view modes according to some embodiments of the disclosure.

As shown in Fig. 6, the GUI is displayed as a scrollview list containing a plurality of sub-view objects, and each sub-view object corresponding to a piece of information. The GUI of the client application may switch between the thumbnail view mode and the complete view mode upon detection a single-finger double-tap gesture on the touch screen 212. In the thumbnail view mode, when the user applies a single-finger double-tap gesture on the touch screen 212, the scrollview list turns into the complete view mode; and in the complete view mode, when the user applies a single-finger double-tap gesture on the touch screen 212, the scrollview list turns into the thumbnail view mode. Regardless of in the thumbnail view mode or in the complete view mode, the sub-view object n, on which the gesture is applied, is presented at a top position of the GUI.

In some embodiments, when a haptic and/or tactile contact event is detected within an area associated with an icon of the application 532, the application 532 is initiated, a GUI of the application, which takes a form of a window, is popped up on the touch screen 212, and several sub-view objects (for example, each corresponding to a piece of news) in a thumbnail view mode may be presented in the GUI. In the thumbnail view mode, only a simplified content, such as a brief summary, a portion or a title, of each sub-view object is presented. If a user is interested in a certain sub-view object, for example, through viewing the titles of those presented sub-view objects, he/she may apply a first touch gesture (for example, a single-finger double-tap gesture) on an area of the touch screen display corresponding to the sub-view object of interest, to switch the GUI from the thumbnail view mode to a complete view mode. In the complete view mode, the sub-view object is presented with its complete content. After the user reads the complete content of the sub-view object, the user may apply a second touch gesture (for example, a single-finger double-tap gesture) on an area of the touch screen corresponding to the sub-view object. Then, the GUI switches back to the thumbnail view mode. To be different from the embodiments as described in Fig. 5, at this point, in the switched thumbnail view mode, the sub-view object n, of which the complete content has just been read by the user will be arranged at the top position of current screen page of the GUI and followed by the subsequent sub-view objects n+1, n+2, n+3....

As shown in Fig. 6, the drawing at the left hand illustrates five sub-view objects n-1, n, n+1, n+2, n+3 in the thumbnail view mode in the GUI. Note that there may be one or more sub-view objects arranged before and after the five objects, which may be presented through an upward/downward slide gesture, as appreciated by one of ordinary skill in the art. When the user initates a thumbnail-to-complete switch of the GUI by, for example, applying the first touch gesture on the area of the touch screen corresponding to the sub-view object n, the sub-view object n with its complete content will be presented in the GUI, as shown in the drawing at the middle. When the user performs a complete-to-thumbnail switch on the GUI by, for example, applying the second touch gesture on the area of the touch screen corresponding to the sub-view object n, the GUI is switched back to the thumbnail view mode, as shown in the drawing at the right hand of Fig. 5, in which the sub-view object n with its simplified content is presented in the beginning area of current screen page.

In the above embodiments, the user reading/manipulation history is recorded by the application, such that when the GUI switches back to the thumbnail view mode, the sub-view objects will be presented from the sub-view object which has been read recently. In this case, it is convenient for the user to continue his/her viewing from the next sub-view object n+1.

In a specific embodiment of the disclosure, a cascade view component, in which the column number of the sub-view objects in the GUI can be changed in response to a single-finger double-tap gesture, is implemented, based on a UlScrollView. The GUI switches between a two-column thumbnail view mode and a single-column complete view mode. Here, the sub-view objects are visually represented as sub-view elements in the GUI. In order to increase the processing efficiency, a memory pool is predefined in the memory of the electronic device for storing the sub-view objects. Any sub-view object which is not presented in the touch screen display currently will be put back into the memory pool. In this embodiment, the UIScrollView is extended to support the single-finger double-tap gesture in addition to the upward/downward slide gesture.

The view mode switch includes a first switch from the two-column thumbnail view mode to the single-column complete view mode and second switch from the single-column complete view mode to the two-column thumbnail view mode, which will be illustrated respectively hereinafter.

The process of implementing the first switch from the two-column thumbnail view mode to the single-column complete view mode includes the steps as follows.
I. When the user initially starts the application to login, the GUI is to be displayed in the two-column thumbnail view mode in default, and before that, the following data have to be stored in the memory:
   a) the initial position of each sub-view element in the UIScrollView in the thumbnail view mode, which is arranged in array of sub-view objects and has a time index, for example, a timestamp or a serial number;
   b) a reusable memory pool for storing the array of sub-view objects and information contents associated with the sub-view objects; and
   c) a detection area of each sub-view object, in which the applied single-finger double-tap gesture can be detected.
II. The sub-view objects need to presented are determined based on a scrolling position of the UlScrollView, the corresponding sub-view elements are rendered in the GUI, and the sub-view objects which are not within a current display range are put back in the memory pool.
   Here, it may be necessary to determine whether the user intends to scroll the view list or to track the sub-view objects represented as sub-view elements in the scrollview list. For this, a timer is set. Before the timer is started, it may be necessary to determine whether there is any movement of the finger touching the screen. That is, the scrolling event is triggered based on an adequate distance of finger movement. If there is no adequate distance of finger movement when the timer is started, the scrolling event will not be triggered, and thus a tracking event will be transferred to the sub-view element being touched to revoke the sub-view object. If the finger moves a threshold distance on the touch screen display before the timer is stopped, the scrolling event will be triggered, any tracking event of the sub-view element will be cancelled and the GUI scrolls.
   Here, the UlScrollView refers to an information interface for adjusting a position of an original point of each sub-view object. Based on the position of the original point of each sub-view object, the sub-view element is created and the information content associated with the sub-view object is imported into the sub-view element. The position of the original point is an offset of the sub-view object. The UlScrollView manages the layout of the sub-view objects with information contents. Note that the sub-view object should have a size no larger than that of the touch screen display. When the user causes the GUI to scroll, the sub-view objects may be added or removed, depending on whether they are visible in current screen page of the GUI.
III. If the user is interested in a sub-view object represented as a sub-view element, the user may apply a single-finger double-tap gesture on the touch screen display, and then it is detected the gesture is applied within a detection area of which sub-view object;
IV. If the gesture is applied within a detection area of the revoked sub-view object, the switch from the two-column thumbnail view mode to the single-column complete view mode is triggered. The specific operations are described as follows.
   a) an index (for example, a timestamp or a serial number) of the selected sub-view object is recorded;
   b) based on default parameters of the selected sub-view object, for example, the original point position, the width and the height, the animation of the selected sub-view object is enlarged to a size in the single-column complete view mode; animations of sub-view objects adjacent to the selected sub-view object in the array of sub-view objects are enlarged to their respective sizes in the single-column complete view mode; and
   c) when the playing of the animation is finished, based on the index of the selected sub-view object, the contentOffset attribute of the is configured, such that the UlScrollView immediately scrolls to an initial position of the selected sub-view in the single-column complete view mode.

Here, the contentOffset attribute is used to track the specific position of the UlScrollView. Particularly, the contentOffset attribute may be set as a position of the top left corner of the currently visible sub-view element in the scrollview list of the GUI.

The process of implementing the second switch from the single-column complete view mode to the two-column thumbnail view mode includes the steps as follows.
I. When the GUI is to be displayed in the single-column complete view mode, the user may apply a single-finger double tap gesture on a sub-view object represented as a sub-view element, and the following data have to be stored in the memory:
   a) the initial position of each sub-view element (representing a respective sub-view object) in the UlScrollView in the two-column thumbnail view mode, which is arranged in array of sub-view objects using a time index, for example, a timestamp or a serial number;
   b) a reusable memory pool for storing the array of sub-view objects and information contents associated with the sub-view objects; and
   c) a detection area of each sub-view object, in which the single-finger double-tap gesture can be detected.
II. it is detected the single-finger double-tap gesture is applied within a detection area of which sub-view object;
IV. If the gesture is applied within a detection area of the revoked sub-view object, the switch from the single-column complete view mode to the two-column thumbnail view mode is triggered. The specific operations are described as follows.
   a) an index (for example, a timestamp or a serial number of the selected sub-view object is recorded, and the UlScrollView performs a layout of sub-view objects based on the two-column thumbnail view mode;
   b) based on the index, for example, the timestamp or the serial number, the UlScrollView immediately scrolls to the position of the selected sub-view object, and sub-view elements corresponding to the selected sub-view object and its adjacent sub-view objects shall be rendered in the screen in the two-column thumbnail view mode;
   c) the selected sub-view object and its adjacent sub-view objects are returned to their sizes and relative positions in the single-column complete view mode; and
   d) the selected sub-view object and its adjacent sub-view objects are scaled down and then moved to their respective positions in the two-column thumbnail view mode.

Here, the contentOffset attribute is used to track the specific position of the UIScrollView. Particularly, the contentOffset attribute may be set as a position of the top left corner of the currently visible sub-view element in the scrollview list of the GUI.

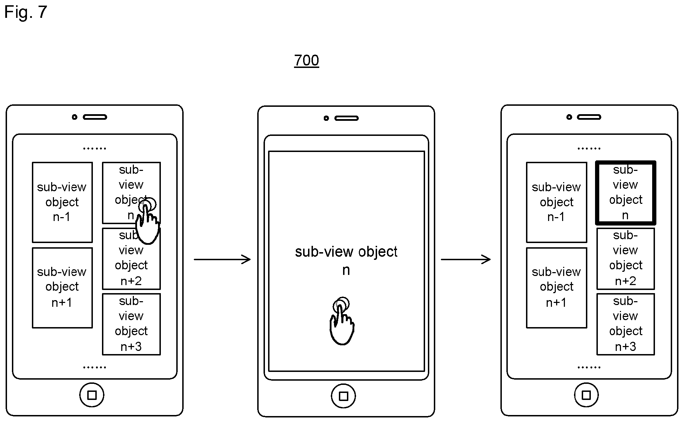

Fig. 7 illustrates several graphical user interfaces of an example application in different view modes according to some embodiments of the disclosure.

Most of the processes for implementing switches between the thumbnail and complete view modes are as same as descriptions referring to Fig. 6, and description of the similar processes are omitted here.

To be different from the embodiment as referring to Fig. 6, as shown in the drawing at the right hand of Fig. 7, when the GUI switches back to the thumbnail view mode, the sort order of the sub-view objects presented in the current screen page is as same as that before the thumbnail-to-complete switch is performed. Further, the sub-view object n, of which the complete content has been read recently, is marked to visually differentiate it from other sub-view objects. As an example, a sub-view element, as a visual representation of the sub-view object n, may be highlighted. As another example, a color associated with the sub-view object n, such as the color of the text in the sub-view element, may be changed.

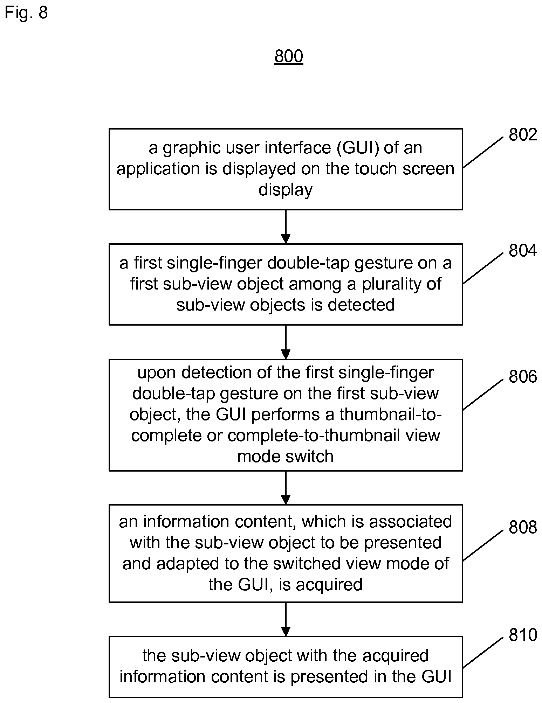

Fig. 8 is a flow chart illustrating a method for implementing a view mode switch of a GUI according to some embodiments of the disclosure. The method may be performed at the electronic device with the touch screen display as shown in Fig. 2.

As shown in Fig. 8, the method 800 includes steps as follows.

Step 802: a graphic user interface (GUI) of an application is displayed on the touch screen display.

Step 804: a single-finger double-tap gesture on a first sub-view object among a plurality of sub-view objects is detected.

It is just an example to set the single-finger double-tap gesture at step 101 as a user command for performing thumbnail-to-complete and complete-to-thumbnail switches of the GUI. However, one of ordinary skill in the art should appreciate that, the disclosure is not limited to this example. A different touch gesture may be employed to perform the switches, for example, a single-finger single-tap gesture, a two-finger slide gesture, or so. Additionally, for each of the thumbnail-to-complete and complete-to-thumbnail switches of the GUI, one of ordinary skill in the art may set a respective touch gesture. For example, the single-finger double-tap gesture may be employed to switch the GUI from the thumbnail view mode to the complete view mode, and the single-finger single-tap gesture may be employed to switch the GUI from the complete view mode to the thumbnail view mode.

Step 806: upon detection of the single-finger double-tap gesture on the first sub-view object, the GUI performs a thumbnail-to-complete or complete-to-thumbnail view mode switch.

Specifically, upon detection of the single-finger double-tap gesture on the first sub-view object, if the GUI is in the thumbnail view mode, the GUI switches to the complete view mode, and if the GUI is in the complete view mode, the GUI switches to the thumbnail view mode.

Step 808: an information content, which is associated with the sub-view object to be presented and adapted to the switched view mode of the GUI, is acquired.

In an embodiment, the information content may be acquired from a memory pool reserved for the client application or from a remote server.

In an embodiment, in the case that the GUI switches from the thumbnail view mode to the complete view mode, an information content, which is associated with the first sub-view object and adapted to the complete view mode, is acquired, where the information content adapted to the complete view mode includes a complete content of a piece of information corresponding to the first sub-view object. Additionally, in this case, an information content, which is associated with the second sub-view object and adapted to the complete view mode, may also be acquired. For example, if in the complete view mode, one or more sub-view objects can be presented in a single screen page of the GUI, it may be beneficial to acquire one or more sub-view objects adjacent to the first sub-view for presenting them together with the first sub-view objects. As another example, if in the complete view mode, just one sub-view object can be presented in a single screen page of the GUI, it may also be beneficial to acquire one or more sub-view objects adjacent to the first sub-view, such that when the user has viewed the first sub-view object, the GUI is capable of immediately presenting the one or more adjacent sub-view objects to the user.

In an embodiment, in the case that the GUI switches from the complete view mode to the thumbnail view mode, an information content, which is associated with the first sub-view object and adapted to the thumbnail view mode, is acquired, where the information content adapted to the thumbnail view mode includes a simplified content of a piece of information corresponding to the first sub-view object. Additionally, in this case, an information content, which is associated with the second sub-view object and adapted to the thumbnail view mode, is be acquired. Generally, the GUI is initially in the thumbnail view mode, and a complete-to-thumbnail view mode switch may cause the GUI to return to the initial view mode. Therefore, in most of the cases (for example, if no update of information occurs), information contents, which are associated with the sub-view objects to be presented and adapted to the thumbnail view mode of the GUI, are usually acquired from the memory pool, so as to implement a quick switch.

Step 810: the sub-view object with the acquired information content is presented in the GUI.

At step 810, the first sub-view object with the acquired information content is presented in the GUI. In an embodiment, the first sub-view is presented in a notable area of the GUI, for example, a top position of the GUI.

Additionally, in an embodiment, a second sub-view object adjacent to the first sub-view object is determined, based on a sort order of the sub-view objects. In this embodiment, the first sub-view object and the second sub-view object are to be presented in the GUI, and the first sub-view object and the second sub-view object may be presented as a scrollview list in the GUI, based on the sort order of the plurality of sub-view objects.

In an embodiment, the second sub-view object may include one or more sub-view objects continuously sorted before the first sub-view object, and/or one or more sub-view objects continuously sorted after the first sub-view object.

Additionally, in an embodiment, the plurality of sub-view objects, each corresponding to a respective one of multiple pieces of information received, are sorted in an order that the multiple pieces of information are received.

In an embodiment, in the case that the GUI switches from the thumbnail view mode to the complete view mode, the presenting step may be implemented as follows:
1) pointing a data pointer in the memory pool to an address of the first sub-view object in a list, in which the sort order of all the sub-view objects is recorded, as described above, determining a position of the first sub-view object in the GUI, i.e., a coordinate of an original point of the first sub-view object, and acquiring an attribute and an index of the first sub-view object, where the attribute includes parameters defining a size of the first sub-view object in the GUI, i.e., a width of the first sub-view object and a height of the first sub-view object, in the complete view mode;
2) creating a first sub-view element in the GUI, based on the coordinate of the original point, the width and the height, and importing the acquired information content, which is associated with the first sub-view object and adapted to the complete view mode of the GUI, to the first sub-view element, where the coordinate of the original point corresponds to an coordinate of a top left corner of the first sub-view element, the width of the first sub-view object corresponds to a width of the first sub-view element and the height of the first sub-view object corresponds to a height of the first sub-view element.
3) pointing a data pointer in the memory pool to an address of the second sub-view object in the list, determining a position of the second sub-view object in the GUI based on the coordinate of the original point of the first sub-view object and an offset, and acquiring an attribute and an index of the second sub-view object;
4) creating a second sub-view element in the GUI and importing the corresponding information content to the second sub-view, in a similar way as described in item 2); one or more second sub-view elements, together with the first sub-view element, form a scrollview list, which may last for several screen pages, in the GUI;
5) rendering the sub-view elements in the GUI, with the first sub-view element in the top position of the current screen page of the GUI.

Similarly, in the case that the GUI switches from the complete view mode to the thumbnail view mode, the presenting step may be implemented as follows:
1') pointing a data pointer in the memory pool to an address of the first sub-view object in a list, in which the sort order of all the sub-view objects is recorded, as described above, determining a position of the first sub-view object in the GUI, i.e., a coordinate of an original point of the first sub-view object, and acquiring an attribute and an index of the first sub-view object, where the attribute includes parameters defining a size of the first sub-view object in the GUI, i.e., a width of the first sub-view object and a height of the first sub-view object, in the thumbnail view mode;
2') creating a first sub-view element in the GUI, based on the coordinate of the original point, the width and the height, and importing the acquired information content, which is associated with the first sub-view object and adapted to the thumbnail view mode of the GUI, to the first sub-view element, where the coordinate of the original point corresponds to an coordinate of a top left corner of the first sub-view element, the width of the first sub-view object corresponds to a width of the first sub-view element and the height of the first sub-view object corresponds to a height of the first sub-view element.
3') pointing a data pointer in the memory pool to an address of the second sub-view object in the list, determining a position of the second sub-view object in the GUI based on the coordinate of the original point of the first sub-view object and an offset, and acquiring an attribute and an index of the second sub-view object;
4') creating a second sub-view element in the GUI and importing the corresponding information content to the second sub-view, in a similar way as described in item 2'); one or more second sub-view elements, together with the first sub-view element, form a scrollview list, which may last for several screen pages, in the GUI;
5') rendering the sub-view elements in the GUI, with the first sub-view in the top position of the current screen page of the GUI.

Although Fig. 8 illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives.

Moreover, the ordinary skilled in the art may understand that all or part of the flow in the method of the embodiments may be implemented through associated hardware controlled by computer programs, which may be stored in a non-transitory computer readable storage medium and may when executed include the flow mentioned in the embodiments of the above methods. In an embodiment, the computer readable storage medium may implement at least some portions of the memory. For example, the computer readable storage medium may include both ROM and RAM. The computer readable storage medium may be implemented as a hard disk, an HDD, a hybrid hard drive (HHD), an optical disc, an optical disc drive (ODD), a magneto-optical disc, a magneto-optical drive, a floppy disk, a floppy disk drive (FDD), magnetic tape, a holographic storage medium, a solid-state drive (SSD), a RAM-drive, a SECURE DIGITAL card, a SECURE DIGITAL drive, or any other suitable computer-readable storage medium.

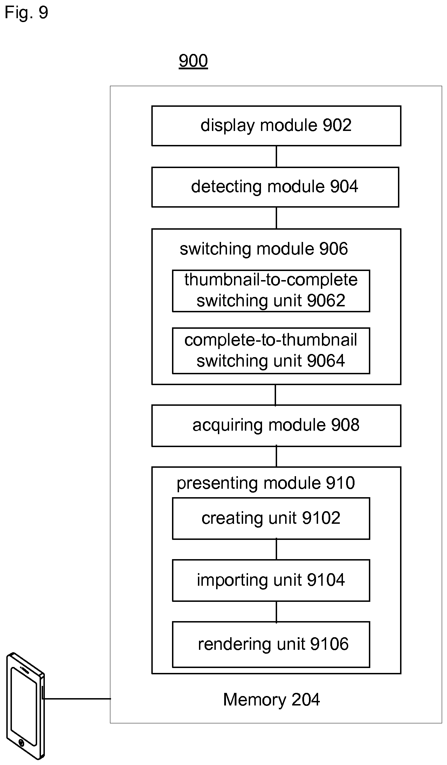

Fig. 9 is a block diagram illustrating an apparatus for implementing a view mode switch of a GUI according to some embodiments of the disclosure.

The apparatus 900 includes a display module 902, a detecting module 904, a switching module 906, an acquiring module 908 and a presenting module 910.

The display module 902 is configured to display a GUI of an application on a touch screen display of an electronic device.

The detecting module 904 is configured to detect a single-finger double-tap gesture on a first sub-view object among a plurality of sub-view objects.

The switching module 906 is configured to cause the GUI to perform a thumbnail-to-complete or complete-to-thumbnail view mode switch, upon detection of the single-finger double-tap gesture on the first sub-view object.

The acquiring module 908 is configured to acquire an information content, which is associated with a sub-view object to be presented and adapted to the switched view mode of the GUI.

The presenting module 910 is configured to present the sub-view object with the acquired information content in the GUI.

In an embodiment, the presenting module 910 is configured to present the first sub-view object with the acquired information content in a top position of the GUI.

In an embodiment, the apparatus 900 further includes a determining module (not shown), configured to determine a second sub-view object adjacent to the first sub-view object, based on a sort order of the plurality of sub-view objects. In this embodiment, the sub-view object to be presented includes the first sub-view object and the second sub-view object, and the presenting module 910 is configured to present the first sub-view object and the second sub-view object as a scrollview list, based on the sort order of the plurality of sub-view objects.

In an embodiment, the second sub-view object includes one or more sub-view objects continuously arranged before the first sub-view object, one or more sub-view objects continuously arranged after the first sub-view object, or both.

In an embodiment, the apparatus 900 further includes a sorting module (not shown), configured to sort the plurality of sub-view objects, each corresponding to a respective one of multiple pieces of information received, in an order that the multiple pieces of information are received.

In an embodiment, the switching module 906 includes a thumbnail-to-complete switching unit 9062 and a complete-to-thumbnail switching unit 9064.

The thumbnail-to-complete switching unit 9062 is configured to cause the GUI to switch from a thumbnail view mode to a complete view mode if the GUI is in the thumbnail view mode.

The complete-to-thumbnail switching unit 9064 is configured to cause the GUI to switch from the complete view mode to the thumbnail view mode when the GUI is in the complete view mode.

In this embodiment, in the thumbnail view mode, each of the sub-view objects are presented with a simplified information content, and in the complete view mode, each of the sub-view objects is presented with a complete information content, and the simplified information content contains at least one of a title, a summary or a portion of the complete information content.

Additionally, in the this embodiment, the acquiring module 908 is configured to acquire the complete information content which is associated with the sub-view object to be presented if the GUI switches from the thumbnail view mode to the complete view mode, or to acquire the simplified information content which is associated with the sub-view object to be presented if the GUI switches from the complete view mode to the thumbnail view mode.

In an embodiment, the acquiring module 908 is configured to acquire the information content from a memory pool of the application or a remote server, based on an index of the sub-view object.

In an embodiment, the presenting module 910 includes a creating unit 9102, an importing unit 9104 and a rendering unit 9106.

The creating unit 9102 is configured to create a sub-view element at a predetermined position of the GUI, based on size attributes of the sub-view object that are adapted to the switched view mode.

The importing unit 9104 is configured to import the acquired information content to the sub-view element.

The rendering unit 9106 is configured to render the sub-view element in the GUI.

In Fig. 9, the apparatus including the various modules and units is shown as a software component within a memory 204 of the electronic device 200 as shown in Fig. 2. However, it should be noted that this is just an illustrative embodiment, and the disclosure is not limited to this embodiment. For example, the terms "apparatus", "module" and "unit" may refer to, be part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term "module" and "unit" may include memory (shared, dedicated, or group) that stores code executed by the processor.

The embodiments described above which are specific and complete merely describe several implementing modes of the present disclosure, however this cannot be understood as a limitation of the scope of the present disclosure. It should be noted that for the ordinary skilled in the art, various alterations and modifications may also be made without departing from the concept of the present disclosure, and all these shall fall in the protection scope of the present disclosure. Therefore, the protection scope of the present disclosure should be limited by the appended claims.

## Claims

1. A method, comprising:
at an electronic device with a touch screen display:
displaying (802) a graphic user interface, GUI, of an application on the touch screen display;
detecting (804) a single-finger double-tap gesture on a first sub-view object among a plurality of sub-view objects;
upon detection of the single-finger double-tap gesture on the first sub-view object, causing (806) the GUI to perform a thumbnail-to-complete or complete-to-thumbnail view mode switch;
acquiring (808) information from a remote server, which is associated with a sub-view object to be presented and adapted to the switched view mode of the GUI; and
presenting (810) the sub-view object with the acquired information in the GUI,
**characterized in that**,
the acquiring the information from the remote server comprises:
if the GUI switches from the thumbnail view mode to the complete view mode, acquiring complete information which is associated with the sub-view object to be presented, or
if the GUI switches from the complete view mode to the thumbnail view mode, acquiring simplified information which is associated with the sub-view object to be presented,
wherein the simplified information contains at least one of a title, a summary or a portion of the complete information,
wherein the presenting (810) the sub-view object with the acquired information in the GUI comprises:
creating a sub-view element at a predetermined position of the GUI, based on size attributes of the sub-view object that are adapted to the switched view mode;
importing the acquired information to the sub-view element; and
rendering the sub-view element in the GUI.

2. The method according to claim 1, wherein the presenting (810) the sub-view object with the acquired information in the GUI comprises:
presenting the first sub-view object with the acquired information at a top position of the GUI.

3. The method according to claim 1 or 2, further comprising:
determining a second sub-view object adjacent to the first sub-view object, based on a sort order of the plurality of sub-view objects,
wherein the sub-view object to be presented comprises the first sub-view object and the second sub-view object, and
wherein the presenting the sub-view object with the acquired information content in the GUI comprises: presenting the first sub-view object and the second sub-view object as a scrollview list in the GUI, based on the sort order of the plurality of sub-view objects, and
wherein the second sub-view object comprises: one or more sub-view objects continuously sorted before the first sub-view object, one or more sub-view objects continuously sorted after the first sub-view object, or both.

4. The method according to any one of claims 1 to 3, further comprising:
sorting the plurality of sub-view objects, each corresponding to a respective one of multiple pieces of information received, in an order that the multiple pieces of information are received.

5. The method according to any one of claims 1 to 4,
wherein the causing (806) the GUI to perform the thumbnail-to-complete or complete-to-thumbnail view mode switch comprises:
when the GUI is in the thumbnail view mode, causing the GUI to switch from a thumbnail view mode to a complete view mode, and
when the GUI is in the complete view mode, causing the GUI to switch from the complete view mode to the thumbnail view mode,
wherein in the thumbnail view mode, each of the sub-view objects is presented with the simplified information, and in the complete view mode, each of the sub-view objects is presented with the complete information.

6. An apparatus, comprising:
a display module (902), configured to display a graphic user interface, GUI, of an application on a touch screen display of an electronic device, wherein a plurality of sub-view objects are included in the GUI;
a detecting module (904), configured to detect a single-finger double-tap gesture on a first sub-view object among the plurality of sub-view objects,
a switching module (906), configured to cause the GUI to perform a thumbnail-to-complete or complete-to-thumbnail view mode switch, upon detection of the single-finger double-tap gesture on the first sub-view object;
an acquiring module (908), configured to acquire information from a remote server, which is associated with a sub-view object to be presented and adapted to the switched view mode of the GUI; and
a presenting module (910), configured to present the sub-view object with the acquired information in the GUI,
**characterized in that**,
the acquiring module (908) is configured to acquire complete information which is associated with the sub-view object to be presented if the GUI switches from the thumbnail view mode to the complete view mode, or to acquire simplified information which is associated with the sub-view object to be presented if the GUI switches from the complete view mode to the thumbnail view mode, wherein the simplified information contains at least one of a title, a summary or a portion of the complete information, and
wherein the presenting module (910) comprises:
a creating unit (9102), configured to create a sub-view element at a predetermined position of the GUI, based on size attributes of the sub-view object that are adapted to the switched view mode;
an importing unit (9104), configured to import the acquired information to the sub-view element; and
a rendering unit (9106), configured to render the sub-view element in the GUI.

7. The apparatus according to claim 6, wherein the presenting module (910) is configured to present the first sub-view object with the acquired information in a top position of the GUI.

8. The apparatus according to claim 6 or 7, further comprising:
a determining module, configured to determine a second sub-view object adjacent to the first sub-view object, based on a sort order of the plurality of sub-view objects,
wherein the sub-view object to be presented comprises the first sub-view object and the second sub-view object, and
wherein the second sub-view object comprises: one or more sub-view objects continuously arranged before the first sub-view object, one or more sub-view objects continuously arranged after the first sub-view object, or both.

9. The apparatus according to any one of claims 6 to 8, further comprising:
a sorting module, configured to sort the plurality of sub-view objects, each corresponding to a respective one of multiple pieces of information received, in an order that the multiple pieces of information are received.

10. The apparatus according to any one of claims 6 to 9, wherein the switching module comprises:
a thumbnail-to-complete switching unit (9062), configured to cause the GUI to switch from a thumbnail view mode to a complete view mode if the GUI is in the thumbnail view mode, and
a complete-to-thumbnail switching unit (9064), configured to cause the GUI to switch from the complete view mode to the thumbnail view mode when the GUI is in the complete view mode,
wherein in the thumbnail view mode, each of the sub-view objects is presented with the simplified information, and in the complete view mode, each of the sub-view objects is presented with the complete information.

11. An electronic device (104) according to claim 6, further comprising:
a touch screen display (206);
a processor (202), coupled to the touch screen display (206); and
a memory (204), coupled to the processor (202), and including instructions that, when executed, cause the processor (202) to perform the method according to any one of claims 1 to 5.

12. The electronic device (104) according to claim 11, wherein
the electronic device (104) actively or passively receives the information from a server (102).

13. A non-transitory computer-readable storage medium including instructions that, when executed, cause a processor to perform the method according to any one of claims 1 to 5.

## Patentansprüche

1. Verfahren, umfassend:
bei einem elektronischen Gerät mit einer Touchscreen-Anzeige:
Anzeigen (802) einer grafischen Benutzeroberfläche, GUI, einer Anwendung auf der Touchscreen-Anzeige;
Erkennen (804) einer Einzelfinger-Doppeltippgeste auf einem ersten Unteransichtsobjekt unter einer Mehrzahl von Unteransichtsobjekten;
Bewirken (806), nach dem Erkennen der Einzelfinger-Doppeltippgeste auf dem ersten Unteransichtsobjekt, dass die GUI eine Miniaturansicht-zu-Vollansicht- oder Vollansicht-zu-Miniaturansicht-Modusumschaltung durchführt;
Erfassen (808) von Information von einem entfernten Server, die einem Unteransichtsobjekt zugeordnet ist, das präsentiert werden soll und an den geschalteten Ansichtsmodus der GUI angepasst ist; und
Präsentieren (810) des Unteransichtsobjekts mit der erfassten Information in der GUI,
**dadurch gekennzeichnet, dass**
das Erfassen der Information von dem entfernten Server umfasst:
wenn die GUI vom Miniaturansichtsmodus in den Vollansichtsmodus wechselt,
Erfassen von vollständiger Information, die dem zu präsentierenden Unteransichtsobjekt zugeordnet ist, oder
wenn die GUI vom Vollansichtsmodus in den Miniaturansichtsmodus wechselt,
Erfassen von vereinfachter Information, die dem zu präsentierenden Unteransichtsobjekt zugeordnet ist,
wobei die vereinfachte Information mindestens eines von einem Titel, einer Zusammenfassung oder einem Teil der vollständigen Information enthält,
wobei das Präsentieren (810) des Unteransichtsobjekts mit der erfassten Information in der GUI umfasst:
Erstellen eines Unteransichtselements an einer vorbestimmten Position der GUI, basierend auf Größenattributen des Unteransichtsobjekts, die an den geschalteten Ansichtsmodus angepasst sind;
Importieren der erfassten Information in das Unteransichtselement; und
Wiedergeben des Unteransichtselements in der GUI.

2. Verfahren nach Anspruch 1, wobei das Präsentieren (810) des Unteransichtsobjekts mit der erfassten Information in der GUI umfasst:
Präsentieren des ersten Unteransichtsobjekts mit der erfassten Information an einer obersten Position der GUI.

3. Verfahren nach Anspruch 1 oder 2, ferner umfassend:
Bestimmen, basierend auf einer Sortierreihenfolge der Mehrzahl von Unteransichtsobjekten, eines zu dem ersten Unteransichtsobjekt benachbarten zweiten Unteransichtsobjekts,
wobei das zu präsentierende Unteransichtsobjekt das erste Unteransichtsobjekt und das zweite Unteransichtsobjekt umfasst, und
wobei das Präsentieren des Unteransichtsobjekts mit dem erfassten Informationsgehalt in der GUI umfasst: Präsentieren, basierend auf der Sortierreihenfolge der Mehrzahl von Unteransichtsobjekten, des ersten Unteransichtsobjekts und des zweiten Unteransichtsobjekts als eine Scrollansichtsliste in der GUI, und
wobei das zweite Unteransichtsobjekt umfasst: ein oder mehrere kontinuierlich vor dem ersten Unteransichtsobjekt sortierte Unteransichtsobjekte, ein oder mehrere kontinuierlich nach dem ersten Unteransichtsobjekt sortierte Unteransichtsobjekte, oder beides.

4. Verfahren nach einem der Ansprüche 1 bis 3, ferner umfassend:
Sortieren der Mehrzahl von Unteransichtsobjekten, die jeweils einer jeweiligen von mehreren empfangenen Informationen entsprechen, in einer Reihenfolge, in der die mehreren Informationen empfangen werden.

5. Verfahren nach einem der Ansprüche 1 bis 4,
wobei das Bewirken (806), dass die GUI die Miniaturansicht-zu-Vollansicht- oder Vollansicht-zu-Miniaturansicht-Modusumschaltung durchführt, umfasst:
wenn sich die GUI im Miniaturansichtsmodus befindet, Bewirken, dass die GUI von einem Miniaturansichtsmodus in einen Vollansichtsmodus umschaltet, und
wenn sich die GUI im Vollansichtsmodus befindet, Bewirken, dass die GUI vom Vollansichtsmodus in den Miniaturansichtsmodus umschaltet,
wobei im Miniaturansichtsmodus jedes der Unteransichtsobjekte mit der vereinfachten Information präsentiert wird, und im Vollansichtsmodus jedes der Unteransichtsobjekte mit der vollständigen Information präsentiert wird.

6. Gerät, umfassend:
ein Anzeigemodul (902), das dazu konfiguriert ist, eine grafische Benutzeroberfläche, GUI, einer Anwendung auf einer Touchscreen-Anzeige einer elektronischen Vorrichtung anzuzeigen, wobei eine Mehrzahl von Unteransichtsobjekten in der GUI umfasst sind;
ein Erkennungsmodul (904), das dazu konfiguriert ist, eine Einzelfinger-Doppeltippgeste auf einem ersten Unteransichtsobjekt aus der Mehrzahl von Unteransichtsobjekten zu erkennen,
ein Schaltmodul (906), das dazu konfiguriert ist, zu bewirken, dass die GUI bei Erkennen der Einzelfinger-Doppeltippgeste eine Miniaturansicht-zu-Vollansicht- oder Vollansicht-zu-Miniaturansicht-Modusumschaltung durchführt;
ein Erfassungsmodul (908), das dazu konfiguriert ist, von einem entfernten Server Information zu erfassen, die einem Unteransichtsobjekt zugeordnet ist, das präsentiert werden soll und an den geschalteten Ansichtsmodus der GUI angepasst ist; und
ein Präsentationsmodul (910), das dazu konfiguriert ist, das Unteransichtsobjekt mit der erfassten Information in der GUI zu präsentieren,
**dadurch gekennzeichnet, dass**,
das Erfassungsmodul (908) dazu konfiguriert ist, vollständige Information zu erfassen, die dem zu präsentierenden Unteransichtsobjekt zugeordnet ist, wenn die GUI vom Miniaturansichtsmodus in den Vollansichtsmodus umschaltet, oder um vereinfachte Information zu erfassen, die dem zu präsentierenden Unteransichtsobjekt zugeordnet ist, wenn die GUI vom Vollansichtsmodus in den Miniaturansichtsmodus umschaltet, wobei die vereinfachte Information mindestens eines von einem Titel, einer Zusammenfassung oder einem Teil der vollständigen Information enthält, und
wobei das Präsentationsmodul (910) umfasst:
eine Erstellungseinheit (9102), die dazu konfiguriert ist, basierend auf Größenattributen des Unteransichtsobjekts, die an den geschalteten Ansichtsmodus angepasst sind, ein Unteransichtselement an einer vorbestimmten Position der GUI zu erstellen;
eine Importiereinheit (9104), die dazu konfiguriert ist, die erfasste Information in das Unteransichtselement zu importieren; und
eine Wiedergabeeinheit (9106), die dazu konfiguriert ist, das Unteransichtselement in der GUI wiederzugeben.

7. Gerät nach Anspruch 6, wobei das Präsentationsmodul (910) dazu konfiguriert ist, das erste Unteransichtsobjekt mit der erfassten Information in einer obersten Position der GUI zu präsentieren.

8. Gerät nach Anspruch 6 oder 7, ferner umfassend:
ein Bestimmungsmodul, das dazu konfiguriert ist, basierend auf einer Sortierreihenfolge der Mehrzahl von Unteransichtsobjekten ein zu dem ersten Unteransichtsobjekt benachbartes zweites Unteransichtsobjekt zu bestimmen,
wobei das zu präsentierende Unteransichtsobjekt das erste Unteransichtsobjekt und das zweite Unteransichtsobjekt umfasst, und
wobei das zweite Unteransichtsobjekt umfasst: ein oder mehrere kontinuierlich vor dem ersten Unteransichtsobjekt angeordnete Unteransichtsobjekte, ein oder mehrere kontinuierlich nach dem ersten Unteransichtsobjekt angeordnete Unteransichtsobjekte, oder beides.

9. Gerät nach einem der Ansprüche 6 bis 8, ferner umfassend:
ein Sortiermodul, das dazu konfiguriert ist, die Mehrzahl von Unteransichtsobjekten, die jeweils einer jeweiligen von mehreren empfangenen Informationen entsprechen, in einer Reihenfolge zu sortieren, in der die mehreren Informationen empfangen werden.

10. Gerät nach einem der Ansprüche 6 bis 9, wobei das Schaltmodul umfasst:
eine Miniaturansicht-zu-Vollansicht-Schalteinheit (9062), die dazu konfiguriert ist, zu bewirken, dass die GUI von einem Miniaturansichtsmodus in einen Vollansichtsmodus umschaltet, wenn sich die GUI in dem Miniaturansichtsmodus befindet, und
eine Vollansicht-zu-Miniaturansicht-Schalteinheit (9064), die dazu konfiguriert ist, zu bewirken, dass die GUI vom Vollansichtsmodus in den Miniaturansichtsmodus umschaltet, wenn sich die GUI im Vollansichtsmodus befindet,
wobei im Miniaturansichtsmodus jedes der Unteransichtsobjekte mit der vereinfachten Information präsentiert wird, und im Vollansichtsmodus jedes der Unteransichtsobjekte mit der vollständigen Information präsentiert wird.

11. Elektronische Vorrichtung (104) nach Anspruch 6, ferner umfassend:
eine Touchscreen-Anzeige (206);
einen Prozessor (202), der mit der Touchscreen-Anzeige (206) gekoppelt ist; und
einen Speicher (204), der mit dem Prozessor (202) gekoppelt ist und Anweisungen umfasst, die bewirken, wenn sie ausgeführt werden, dass der Prozessor (202) das Verfahren nach einem der Ansprüche 1 bis 5 auszuführt.

12. Elektronische Vorrichtung (104) nach Anspruch 11, wobei
die elektronische Vorrichtung (104) die Informationen aktiv oder passiv von einem Server (102) empfängt.

13. Nichtflüchtiges, computerlesbares Speichermedium, das Anweisungen umfasst, die bewirken, wenn sie ausgeführt werden, dass ein Prozessor das Verfahren nach einem der Ansprüche 1 bis 5 durchführt.

## Revendications

1. Procédé, comprenant :
au niveau d'un dispositif électronique ayant un dispositif d'affichage à écran tactile :
afficher (802) une interface utilisateur graphique, GUI, d'une application sur le dispositif d'affichage à écran tactile ;
détecter (804) un geste de double toucher à un seul doigt sur un premier objet de sous-vue parmi une pluralité d'objets de sous-vue ;
lors de la détection du geste de double toucher à un seul doigt sur le premier objet de sous-vue, amener (806) la GUI à réaliser une commutation de mode de visionnage de miniature à complet ou de complet à miniature ;
acquérir (808) des informations à partir d'un serveur à distance, qui sont associées à un objet de sous-vue à présenter et à adapter au mode de visionnage commuté de la GUI ; et
présenter (810) l'objet de sous-vue avec les informations acquises dans la GUI,
**caractérisé par le fait que**,
l'acquisition des informations à partir du serveur à distance comprend :
si la GUI commute du mode de visionnage miniature au mode de visionnage complet, acquérir des informations complètes qui sont associées à l'objet de sous-vue à présenter, ou
si la GUI commute du mode de visionnage complet au mode de visionnage miniature, acquérir des informations simplifiées qui sont associées à l'objet de sous-vue à présenter,
les informations simplifiées contenant au moins l'un parmi un titre, un résumé ou une partie des informations complètes,
la présentation (810) de l'objet de sous-vue avec les informations acquises dans la GUI comprenant :
créer un élément de sous-vue à une position prédéterminée de la GUI, sur la base d'attributs de taille de l'objet de sous-vue qui sont adaptés au mode de visionnage commuté ;
importer les informations acquises sur l'élément de sous-vue ; et
rendre l'élément de sous-vue dans la GUI.

2. Procédé selon la revendication 1, dans lequel la présentation (810) de l'objet de sous-vue avec les informations acquises dans la GUI comprend :
présenter le premier objet de sous-vue avec les informations acquises à une position supérieure de la GUI.

3. Procédé selon la revendication 1 ou 2, comprenant en outre :
déterminer un deuxième objet de sous-vue adjacent au premier objet de sous-vue, sur la base d'un ordre de tri de la pluralité d'objets de sous-vue,
l'objet de sous-vue à présenter comprenant le premier objet de sous-vue et le deuxième objet de sous-vue, et
la présentation de l'objet de sous-vue avec le contenu d'informations acquises dans la GUI comprenant : présenter le premier objet de sous-vue et le deuxième objet de sous-vue sous la forme d'une liste de vues à défilement dans la GUI, sur la base de l'ordre de tri de la pluralité d'objets de sous-vue, et
le deuxième objet de sous-vue comprenant : un ou plusieurs objets de sous-vue triés de manière continue avant le premier objet de sous-vue, un ou plusieurs objets de sous-vues triés de manière continue après le premier objet de sous-vue, ou les deux.

4. Procédé selon l'une quelconque des revendications 1 à 3, comprenant en outre :
trier la pluralité d'objets de sous-vue, chacun correspondant à un élément d'informations respectif parmi de multiples éléments d'informations reçus, dans un ordre dans lequel les multiples éléments d'informations sont reçus.

5. Procédé selon l'une quelconque des revendications 1 à 4,
dans lequel l'action consistant à amener (806) la GUI à réaliser la commutation de mode de visionnage de miniature à complet ou de complet à miniature comprend :
lorsque la GUI est dans le mode de visionnage miniature, amener la GUI à commuter d'un mode de visionnage miniature à un mode de visionnage complet, et
lorsque la GUI est dans le mode de visionnage complet, amener la GUI à commuter du mode de visionnage complet au mode de visionnage miniature,
dans le mode de visionnage miniature, chacun des objets de sous-vue étant présenté avec les informations simplifiées, et dans le mode de visionnage complet, chacun des objets de sous-vue étant présenté avec les informations complètes.

6. Appareil, comprenant :
un module d'affichage (902), configuré pour afficher une interface utilisateur graphique, GUI, d'une application sur un dispositif d'affichage à écran tactile d'un dispositif électronique, une pluralité d'objets de sous-vue étant inclus dans la GUI ;
un module de détection (904), configuré pour détecter un geste de double toucher à un seul doigt sur un premier objet de sous-vue parmi la pluralité d'objets de sous-vue,
un module de commutation (906), configuré pour amener la GUI à réaliser une commutation de mode de visionnage de miniature à complet ou de complet à miniature, lors de la détection du geste de double toucher à un seul doigt sur le premier objet de sous-vue ;
un module d'acquisition (908), configuré pour acquérir des informations à partir d'un serveur à distance, qui sont associées à un objet de sous-vue à présenter et à adapter au mode de visionnage commuté de la GUI ; et
un module de présentation (910), configuré pour présenter l'objet de sous-vue avec les informations acquises dans la GUI,
**caractérisé par le fait que**,
le module d'acquisition (908) est configuré pour acquérir des informations complètes qui sont associées à l'objet de sous-vue à présenter si la GUI commute du mode de visionnage miniature au mode de visionnage complet, ou pour acquérir des informations simplifiées qui sont associées à l'objet de sous-vue à présenter si la GUI commute du mode de visionnage complet au mode de visionnage miniature, les informations simplifiées contenant au moins l'un parmi un titre, un résumé ou une partie des informations complètes, et
le module de présentation (910) comprenant :
une unité de création (9102), configurée pour créer un élément de sous-vue à une position prédéterminée de la GUI, sur la base d'attributs de taille de l'objet de sous-vue qui sont adaptés au mode de visionnage commuté ;
une unité d'importation (9104), configurée pour importer les informations acquises dans l'élément de sous-vue ; et
une unité de rendu (9106), configuré pour rendre l'élément de sous-vue dans la GUI.

7. Appareil selon la revendication 6, dans lequel le module de présentation (910) est configuré pour présenter le premier objet de sous-vue avec les informations acquises dans une position supérieure de la GUI.

8. Appareil selon la revendication 6 ou 7, comprenant en outre :
un module de détermination, configuré pour déterminer un deuxième objet de sous-vue adjacent au premier objet de sous-vue, sur la base d'un ordre de tri de la pluralité d'objets de sous-vue,
l'objet de sous-vue à présenter comprenant le premier objet de sous-vue et le deuxième objet de sous-vue, et
le deuxième objet de sous-vue comprenant : un ou plusieurs objets de sous-vue agencés de manière continue avant le premier objet de sous-vue, un ou plusieurs objets de sous-vue agencés de manière continue après le premier objet de sous-vue, ou les deux.

9. Appareil selon l'une quelconque des revendications 6 à 8, comprenant en outre :
un module de tri, configuré pour trier la pluralité d'objets de sous-vue, chacun correspondant à un élément d'informations respectif parmi de multiples éléments d'informations reçus, dans un ordre dans lequel les multiples éléments d'informations sont reçus.

10. Appareil selon l'une quelconque des revendications 6 à 9, dans lequel le module de commutation comprend :
une unité de commutation de miniature à complet (9062), configurée pour amener la GUI à commuter d'un mode de visionnage miniature à un mode de visionnage complet si la GUI est dans le mode de visionnage miniature, et
une unité de commutation de complet à miniature (9064), configurée pour amener la GUI à commuter du mode de visionnage complet au mode de visionnage miniature lorsque la GUI est dans le mode de visionnage complet,
dans le mode de visionnage miniature, chacun des objets de sous-vue étant présenté avec les informations simplifiées, et dans le mode de visionnage complet, chacun des objets de sous-vue étant présenté avec les informations complètes.

11. Dispositif électronique (104) selon la revendication 6, comprenant en outre :
un dispositif d'affichage à écran tactile (206) ;
un processeur (202), couplé au dispositif d'affichage à écran tactile (206) ; et
une mémoire (204), couplée au processeur (202), et comprenant des instructions qui, lorsqu'elles sont exécutées, amènent le processeur (202) à réaliser le procédé selon l'une quelconque des revendications 1 à 5.

12. Dispositif électronique (104) selon la revendication 11, dans lequel
le dispositif électronique (104) reçoit de manière active ou passive les informations à partir d'un serveur (102).

13. Support de stockage lisible par ordinateur non transitoire comprenant des instructions qui, lorsqu'elles sont exécutées, amènent un processeur à réaliser le procédé selon l'une quelconque des revendications 1 à 5.
